# FASCICULE DE BREVET EUROPEEN

(11) **EP 3 216 703 B1**
(45) Date de publication et mention de la délivrance du brevet: **15.05.2019**
(21) Numéro de dépôt: 17159365.0
(22) Date de dépôt: 06.03.2017
(51) Int. Cl.: B64F 1/22, B60D 1/167, B60D 1/155

(54) **SYSTÈME DE REMORQUAGE POUR ENGIN ROULANT, EN PARTICULIER POUR HÉLICOPTÈRE**
SCHLEPPSYSTEM FÜR EIN FAHRZEUG, INSBESONDERE HUBSCHRAUBER
TOWING SYSTEM FOR A VEHICLE, PARTICULARLY FOR A HELICOPTER

(30) Priorité: 10.03.2016 FR 1652030
(43) Date de publication de la demande: 13.09.2017
(73) Titulaire: ORTEC EXPANSION, 13799 Aix En Provence Cedex 3 (FR)
(72) Inventeur: RIVARD, Daniel, 75007 Paris (FR)
(74) Mandataire: Gevers & Orès

(56) Documents cités:
- FR-A1- 2 675 919
- US-A- 3 995 878
- US-A- 4 269 429
- US-A1- 2002 098 069
- US-A1- 2012 248 738

## Description

### DOMAINE TECHNIQUE

La présente invention concerne un système de remorquage d'un engin roulant et, notamment d'un aéronef.

### ÉTAT DE LA TECHNIQUE

Lorsqu'un aéronef, notamment un hélicoptère, est remorqué au sol, il est nécessaire que le système de remorquage utilisé à cet effet soit capable de maintenir au moins une roue avant de l'aéronef. Selon le type d'aéronef, la dimension et/ou la configuration de la ou des roues peuvent être différentes.

Le système de remorquage peut être plus ou moins adapté selon le type d'aéronef qu'il doit remorquer. Or, il peut être utile qu'un système de remorquage puisse être destiné à remorquer plusieurs types d'aéronefs.

Par ailleurs, on connaît, par le document US-2012/248738, qui est considéré comme l'art antérieur le plus proche et décrit les caractéristiques du préambule de la revendication 1, une barre de remorquage pour remorquer un aéronef. Cette barre de remorquage comprend une fourche composée de longerons. Un dispositif permet de faire pivoter les longerons afin de pouvoir installer une roue de l'aéronef entre les deux longerons. Les longerons deviennent parallèles lorsque la roue est installée entre ces deux longerons. Des moyens de maintien maintiennent la roue entre les deux longerons parallèles. Cependant, le dispositif permettant de faire pivoter les longerons ne permet pas de modifier l'écartement entre eux afin que l'écartement puisse s'adapter à toute dimension et/ou toute configuration de roue d'aéronef.

### EXPOSÉ DE L'INVENTION

La présente invention a pour objet de pallier cet inconvénient, en proposant un système de remorquage facilement adaptable à tout type d'engin roulant, et plus particulièrement à un aéronef tel qu'un hélicoptère notamment.

À cet effet, l'invention concerne un système de remorquage comprenant :
- une barre comprenant un axe longitudinal,
- un premier dispositif d'attache disposé à une première extrémité de la barre, le premier dispositif d'attache étant apte à attacher le système de remorquage à un véhicule de remorquage,
- un deuxième dispositif d'attache disposé à une deuxième extrémité de la barre, le deuxième dispositif d'attache étant apte à attacher le système de remorquage à un engin roulant à remorquer.

Selon l'invention, le deuxième dispositif d'attache comprend une fourche apte à retenir au moins une roue de l'engin roulant.

De plus, selon l'invention, la fourche possède :
- deux longerons entre lesquels au moins une roue de l'engin roulant est apte à être reçue, chaque longeron présentant un axe longitudinal sensiblement parallèle à l'axe longitudinal de la barre,
- un dispositif d'écartement apte à modifier l'écartement entre les deux longerons,
- un dispositif de maintien apte à maintenir la roue entre les deux longerons.

Ainsi, grâce notamment à ladite fourche et audit dispositif d'écartement, le système de remorquage peut être adapté à un écartement donné pour le maintien de la roue ou des roues, notamment les roues avant d'un hélicoptère. Le système de remorquage est alors facilement adaptable à tout type d'engin roulant, et notamment d'aéronef, à remorquer.

Selon l'invention, le dispositif d'écartement comprend :
- deux bras coulissants, chaque bras coulissant présentant :
   ∘ un axe longitudinal faisant un angle avec l'axe longitudinal de la barre,
   ∘ une première partie dont une extrémité est fixée à une extrémité d'un longeron, et
   ∘ une deuxième partie dont une extrémité est fixée à la deuxième extrémité de la barre, la deuxième partie étant apte à coulisser dans la première partie selon l'axe longitudinal du bras coulissant,
- un dispositif d'actionnement configuré pour entraîner le coulissement simultanée des bras coulissants.

De préférence, le dispositif d'actionnement comprend :
- quatre tiges articulées deux à deux pour former un parallélogramme déformable compris dans un plan sensiblement parallèle aux axes longitudinaux des longerons, les quatre tiges étant articulées au niveau d'une première paire de coins opposés du parallélogramme selon une première articulation et une deuxième articulation et au niveau d'une deuxième paire de coins opposés selon une troisième articulation et une quatrième articulation, la première articulation étant reliée en rotation à la première partie d'un bras coulissant selon un axe perpendiculaire au plan du parallélogramme, la deuxième articulation étant reliée en rotation à la première partie de l'autre bras coulissant selon un axe perpendiculaire au plan du parallélogramme,
- une tige filetée apte à se visser dans un écrou solidaire de la troisième articulation, la tige filetée présentant une première extrémité apte à tourner dans un logement solidaire de la quatrième articulation, la tige filetée étant configurée de façon qu'un vissage ou un dévissage dans l'écrou est apte à entraîner, respectivement, un rapprochement ou un éloignement entre la première articulation et la deuxième articulation, ledit rapprochement ou ledit éloignement étant apte à entraîner un coulissement de la deuxième partie de chaque bras dans la première partie, ledit coulissement étant apte à entraîner la diminution ou l'augmentation de l'écartement entre les longerons.

De plus, la tige filetée comprend une deuxième extrémité pourvue d'un dispositif de contrôle du vissage et du dévissage de la tige filetée dans l'écrou.

En outre, le dispositif de maintien comprend pour chaque longeron :
- au moins un premier galet fixé à l'extrémité libre du longeron,
- au moins un deuxième galet relié en translation au longeron selon l'axe longitudinal du longeron à l'aide d'un élément de guidage,
- un dispositif élastique apte à exercer une première force sur le deuxième galet selon l'axe longitudinal du longeron, la première force étant apte à amener le deuxième galet à se rapprocher du premier galet de façon que le deuxième galet soit apte à forcer la roue de l'engin roulant à s'appuyer contre le premier galet,
- un dispositif de commande dont l'actionnement permet d'exercer une deuxième force opposée à la première force, la deuxième force étant apte à amener le deuxième galet à s'éloigner du premier galet de façon à dégager la roue de l'engin roulant.

Par ailleurs, le dispositif de commande comprend au moins un treuil et deux câbles, chaque câble présentant une première extrémité fixée au treuil et une deuxième extrémité fixée au deuxième galet, l'actionnement du treuil étant apte à tirer chacun desdits câbles qui sont aptes à exercer la deuxième force sur le deuxième galet.

Avantageusement, l'élément de guidage comprend :
- un support du deuxième galet sur lequel est fixé le deuxième galet, et
- une tige fixée sur le longeron parallèlement à l'axe longitudinal du longeron, la tige étant apte à guider en translation le support du deuxième galet.

Selon une variante, le dispositif élastique comprend un ressort de traction apte à exercer la première force sur le support du deuxième galet.

De plus, le système de remorquage comprend des roues orientables fixées le long de la barre et de la fourche de façon que le système de remorquage soit déplaçable.

De préférence, le système comprend un capteur de force fixé sur la barre apte à détecter la traction et la torsion exercée sur la barre.

### BRÈVE DESCRIPTION DES FIGURES

L'invention, avec ses caractéristiques et avantages, ressortira plus clairement à la lecture de la description faite en référence aux dessins annexés dans lesquels :

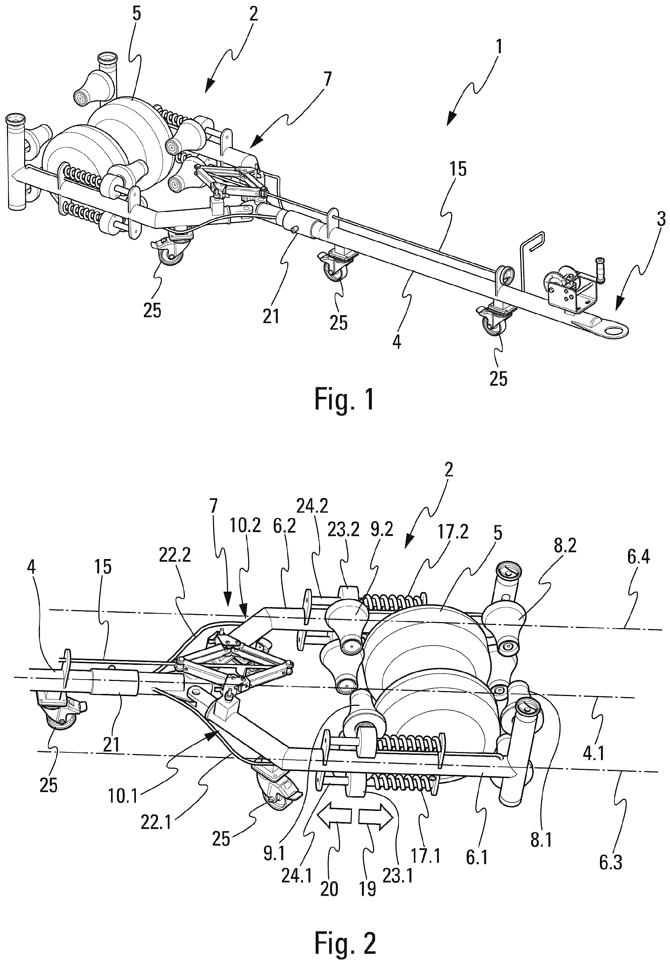

- la figure 1 représente une vue en perspective d'un système de remorquage selon un mode de réalisation ;
- la figure 2 représente une vue en perspective du deuxième dispositif d'attache du système de remorquage ;
- la figure 3 représente une vue en perspective du premier dispositif d'attache du système d'attache ;
- la figure 4 représente une vue en perspective du dispositif d'écartement.

### DESCRIPTION DÉTAILLÉE

La suite de la description fera référence aux figures citées ci-dessus.

L'invention concerne un système de remorquage 1 comprenant une barre 4 munie d'un axe longitudinal 4.1.

Le système de remorquage 1 comprend en outre un premier dispositif 3 d'attache disposé à une première extrémité de la barre 4. Le premier dispositif d'attache 3 permet d'attacher le système de remorquage à un véhicule de remorquage usuel. À titre d'exemple, le véhicule de remorquage est un tracteur.

Le système de remorquage comprend aussi un deuxième dispositif 2 d'attache disposé à une deuxième extrémité de la barre 4. Le deuxième dispositif d'attache 2 permet d'attacher le système de remorquage 1 à un engin roulant à remorquer. À titre d'exemple, l'engin roulant est un avion ou un hélicoptère, pourvu de roues et apte à rouler sur le sol.

Le deuxième dispositif d'attache 2 comprend une fourche apte à retenir au moins une roue 5 de l'engin roulant. La fourche possède deux longerons 6.1 et 6.2 entre lesquels au moins une roue 5 de l'engin roulant peut être reçue. Chaque longeron 6.1 et 6.2 présente un axe longitudinal 6.3 et 6.4 sensiblement parallèle à l'axe longitudinal 4.1 de la barre 4.

À titre d'exemple, la ou les roues 5 font partie d'un train d'atterrissage d'un aéronef, de préférence le train d'atterrissage avant d'un hélicoptère.

Dans l'exemple décrit ci-dessous, on considère que l'engin roulant comprend deux roues 5 faisant partie du même train ou ensemble roulant (non représenté).

La fourche comprend également un dispositif d'écartement 7 et un dispositif de maintien 9.1, 9.2, 8.1, 8.2. Le dispositif d'écartement 7 permet de modifier l'écartement entre les deux longerons 6.1 et 6.2. Le dispositif de maintien 9.1, 9.2, 8.1, 8.2 permet de maintenir les roues 5 entre les deux longerons 6.1, 6.2.

L'écartement correspond à un écartement d'entraxe (distance entre les axes longitudinaux 6.3 et 6.4) entre les deux longerons 6.1 et 6.2.

Selon un mode de réalisation préféré, le dispositif d'écartement 7 comprend deux bras coulissants 10.1, 10.2 et un dispositif d'actionnement.

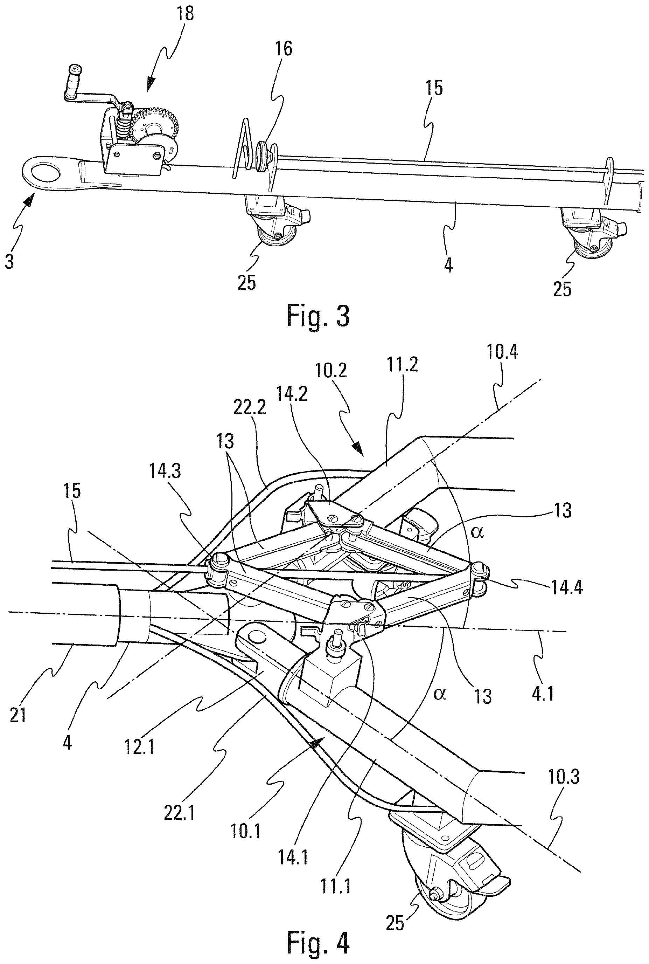

Chaque bras coulissant 10.1, 10.2 présent un axe longitudinal 10.3, 10.4 faisant un angle α avec l'axe longitudinal 4.1 de la barre 4 (figure 4). Chaque bras coulissant comprend en outre une première partie 11.1, 11.2 dont une extrémité est fixée à une extrémité d'un longeron 6.1, 6.2, et une deuxième partie 12.1, 12.2 dont une extrémité est fixée à la deuxième extrémité de la barre 4. La deuxième partie 12.1, 12.2 peut coulisser dans la première partie 11.1, 11.2 selon l'axe longitudinal 10.3, 10.4 du bras coulissant 10.1, 10.2.

Le dispositif d'actionnement est configuré pour entraîner le coulissement simultané des bras coulissants 10,1, 10.2.

Selon une configuration, le dispositif d'actionnement comprend quatre tiges 13 articulées deux à deux pour former un parallélogramme déformable compris dans un plan sensiblement parallèle aux axes longitudinaux 6.3, 6.4 des longerons 6.1, 6.2. Les quatre tiges 13 sont articulées au niveau d'une première paire de coins opposés du parallélogramme selon une première articulation 14.1 et une deuxième articulation 14.2 et au niveau d'une deuxième paire de coins opposés selon une troisième articulation 14.3 et une quatrième articulation 14.4, La première articulation 14.1 est reliée en rotation à la première partie 11.1 d'un bras coulissant 10.1 selon un axe perpendiculaire au plan du parallélogramme. La deuxième articulation 14.2 est reliée en rotation à la première partie 11.2 de l'autre bras coulissant 10.2 selon un axe perpendiculaire au plan du parallélogramme.

Le dispositif d'actionnement comprend en outre une tige filetée 15 apte à se visser dans un écrou solidaire de la troisième articulation 14.3. La tige filetée 15 présente une première extrémité apte à tourner dans un logement solidaire de la quatrième articulation 14.4. La tige filetée 15 est configurée de façon qu'un vissage ou un dévissage dans l'écrou est apte à entraîner, respectivement, un rapprochement ou un éloignement entre la première articulation 14.1 et la deuxième articulation 14.2. Ledit rapprochement ou ledit éloignement est apte à entraîner un coulissement de la deuxième partie 12.1, 12.2 de chaque bras 10.1, 10.2 dans la première partie 11.1, 11.2. Ledit coulissement est apte à entraîner la diminution ou l'augmentation de l'écartement entre les longerons 6.1, 6.2. Ainsi, lorsque la troisième articulation 14.3 s'écarte de la quatrième articulation 14.4, l'écartement entre les longerons 6.1, 6.2 diminue. Lorsque la troisième articulation 14.3 se rapproche de la quatrième articulation 14.4, l'écartement entre les longerons 6.1, 6.2 augmente.

La tige filetée 15 peut comprendre une deuxième extrémité pourvue d'un dispositif de contrôle 16 du vissage et du dévissage de la tige filetée 15 dans l'écrou.

Selon un mode de réalisation, le dispositif de maintien 9.1, 9.2, 8.1, 8.2 comprend pour chaque longeron 6.1, 6.2 au moins un premier galet 8.1, 8.2 fixé à l'extrémité libre du longeron 6.1, 6.2. De préférence, le dispositif de maintien comprend pour chaque longeron 6.1, 6.2 deux premiers galets 8.1, 8.2 disposés parallèlement.

Le dispositif de maintien comprend également au moins un deuxième galet 9.1, 9.2 relié en translation au longeron 6.1, 6.2 selon l'axe longitudinal 6.3, 6.4 du longeron 6.1, 6.2 à l'aide d'un élément de guidage qui guide un déplacement du deuxième galet 9.1, 9.2 parallèlement à l'axe longitudinal 6.3, 6.4 du longeron 6.1, 6.2. De préférence, le dispositif de maintien comprend pour chaque longeron 6.1, 6.2 deux deuxièmes galets 9.1, 9.2 disposés parallèlement.

Le dispositif de maintien comprend aussi un dispositif élastique 17.1, 17.2 apte à exercer une première force 19 sur le deuxième galet 9.1, 9.2 selon l'axe longitudinal 6.3, 6.4 du longeron 6.1, 6.2. La première force 19 permet d'amener le deuxième galet 9.1, 9.2 à se rapprocher du premier galet 8.1, 8.2 de façon que le deuxième galet 9.1, 9.2 soit apte à forcer la roue 5 de l'engin roulant à s'appuyer contre le premier galet 8.1, 8.2.

Le dispositif élastique 17.1, 17.2 peut comprendre un ressort de traction apte à exercer la première force 19 sur le support 23.1, 23.2 du deuxième galet 9.1, 9.2.

De plus, le dispositif de maintien comprend un dispositif de commande 18, 22.1, 22.2 dont l'actionnement permet d'exercer une deuxième force 20 opposée à la première force 19. La deuxième force 20 permet d'amener le deuxième galet 9.1, 9.2 à s'éloigner du premier galet 8.1, 8.2 de façon à dégager la roue 5 de l'engin roulant.

Selon une configuration, le dispositif de commande 18, 22.1, 22.2 comprend au moins un treuil 18 et deux câbles 22.1, 22.2. Chaque câble 22.1, 22.2 présente une première extrémité fixée au treuil 18 et une deuxième extrémité fixée au deuxième galet 9.1, 9.2 L'actionnement du treuil 18 permet de tirer chacun desdits câbles 22.1, 22.2 qui sont aptes à exercer la deuxième force 20 sur le deuxième galet 9.1, 9.2.

Selon une configuration, l'élément de guidage comprend un support 23.1, 23.2 du deuxième galet 9.1, 9.2 sur lequel est fixé le deuxième galet 9.1, 9.2, et une tige 24.1, 24.2 fixée sur le longeron 6.1, 6.2 parallèlement à l'axe longitudinal 6.3, 6.4 du longeron 6.1, 6.2. La tige 24.1, 24.2 permet de guider en translation le support 23.1, 23.2 du deuxième galet 9.1, 9.2.

Le système de remorquage 1 peut être pourvu de roues 25 orientables fixées le long de la barre 4 et de la fourche de façon que le système de remorquage 1 soit déplaçable.

Le système de remorquage 1 peut également comprendre un capteur de force 21 fixé sur la barre. Ce capteur 21 permet de détecter la traction et/ou la torsion exercées sur la barre 4.

La présente description détaille différents modes de réalisation et de configuration ou variantes en référence à des figures et/ou des caractéristiques techniques. L'homme du métier comprendra que les diverses caractéristiques techniques des divers modes ou configurations peuvent être combinées entre elles pour obtenir d'autres modes de réalisation et de configuration, à moins que l'inverse ne soit explicitement mentionné ou que ces caractéristiques techniques ne soient incompatibles. De même, une caractéristique technique d'un mode de réalisation ou d'une configuration peut être isolée des autres caractéristiques techniques de ce mode de réalisation à moins que l'inverse ne soit mentionné. Dans la présente description, de nombreux détails spécifiques sont fournis à titre illustratif et nullement limitatif, de façon à détailler précisément l'invention. L'homme du métier comprendra cependant que l'invention peut être réalisée en l'absence d'un ou plusieurs de ces détails spécifiques ou avec des variantes. À d'autres occasions, certains aspects ne sont pas détaillés de façon à éviter d'obscurcir et d'alourdir la présente description et l'homme du métier comprendra que des moyens divers et variés pourront être utilisés et que l'invention n'est pas limitée aux seuls exemples décrits.

Il doit être évident pour l'homme du métier que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Système de remorquage (1) comprenant :
- une barre (4) comprenant un axe longitudinal (4.1),
- un premier dispositif (3) d'attache disposé à une première extrémité de la barre (4), le premier dispositif d'attache (3) étant apte à attacher le système de remorquage à un véhicule de remorquage,
- un deuxième dispositif (2) d'attache disposé à une deuxième extrémité de la barre (4), le deuxième dispositif d'attache (2) étant apte à attacher le système de remorquage (1) à un engin roulant à remorquer,
le deuxième dispositif d'attache (2) comprenant une fourche apte à retenir au moins une roue (5) de l'engin roulant, la fourche possédant :
- deux longerons (6.1, 6.2) entre lesquels au moins une roue (5) de l'engin roulant est apte à être reçue, chaque longeron (6.1, 6.2) présentant un axe longitudinal (6.3, 6.4) sensiblement parallèle à l'axe longitudinal (4.1) de la barre (4),
- un dispositif d'écartement (7) apte à modifier l'écartement entre les deux longerons (6.1, 6.2),
- un dispositif de maintien (9.1, 9.2, 8.1, 8.2) apte à maintenir la roue (5) entre les deux longerons (6.1, 6.2),
**caractérisé en ce que** le dispositif d'écartement (7) comprend :
- deux bras coulissants (10.1, 10.2), chaque bras coulissant (10.1, 10.2) présentant :
∘ un axe longitudinal (10.3, 10.4) faisant un angle (α) avec l'axe longitudinal (4.1) de la barre (4),
∘ une première partie (11.1, 11.2) dont une extrémité est fixée à une extrémité d'un longeron (6.1, 6.2), et
∘ une deuxième partie (12.1, 12.2) dont une extrémité est fixée à la deuxième extrémité de la barre (4), la deuxième partie (12.1, 12.2) étant apte à coulisser dans la première partie (11.1, 11.2) selon l'axe longitudinal (10.3, 10.4) du bras coulissant (10.1, 10.2),
- un dispositif d'actionnement configuré pour entraîner le coulissement simultanée des bras coulissants (10,1, 10.2).

2. Système selon la revendication 1,
**caractérisé en ce que** le dispositif d'actionnement comprend :
- quatre tiges (13) articulées deux à deux pour former un parallélogramme déformable compris dans un plan sensiblement parallèle aux axes longitudinaux (6.3, 6.4) des longerons (6.1, 6.2), les quatre tiges (13) étant articulées au niveau d'une première paire de coins opposés du parallélogramme selon une première articulation (14.1) et une deuxième articulation (14.2) et au niveau d'une deuxième paire de coins opposés selon une troisième articulation (14.3) et une quatrième articulation (14.4), la première articulation (14.1) étant reliée en rotation à la première partie (11.1) d'un bras coulissant (10.1) selon un axe perpendiculaire au plan du parallélogramme, la deuxième articulation (14.2) étant reliée en rotation à la première partie (11.2) de l'autre bras coulissant (10.2) selon un axe perpendiculaire au plan du parallélogramme,
- une tige filetée (15) apte à se visser dans un écrou solidaire de la troisième articulation (14.3), la tige filetée (15) présentant une première extrémité apte à tourner dans un logement solidaire de la quatrième articulation (14.4), la tige filetée (15) étant configurée de façon qu'un vissage ou un dévissage dans l'écrou est apte à entraîner, respectivement, un rapprochement ou un éloignement entre la première articulation (14.1) et la deuxième articulation (14.2), ledit rapprochement ou ledit éloignement étant apte à entraîner un coulissement de la deuxième partie (12.1, 12.2) de chaque bras (10.1, 10.2) dans la première partie (11.1, 11.2), ledit coulissement étant apte à entraîner la diminution ou l'augmentation de l'écartement entre les longerons (6.1, 6.2).

3. Système selon la revendication 2,
**caractérisé en ce que** la tige filetée (15) comprend une deuxième extrémité pourvue d'un dispositif de contrôle (16) du vissage et du dévissage de la tige filetée (15) dans l'écrou.

4. Système selon l'une quelconque des revendications 1 à 3,
**caractérisé en ce que** le dispositif de maintien (9.1, 9.2, 8.1, 8.2) comprend pour chaque longeron (6.1, 6.2) :
- au moins un premier galet (8.1, 8.2) fixé à l'extrémité libre du longeron (6.1, 6.2),
- au moins un deuxième galet (9.1, 9.2) relié en translation au longeron (6.1, 6.2) selon l'axe longitudinal (6.3, 6.4) du longeron (6.1, 6.2) à l'aide d'un élément de guidage,
- un dispositif élastique (17.1, 17.2) apte à exercer une première force (19) sur le deuxième galet (9.1, 9.2) selon l'axe longitudinal (6.3, 6.4) du longeron (6.1, 6.2), la première force (19) étant apte à amener le deuxième galet (9.1, 9.2) à se rapprocher du premier galet (8.1, 8.2) de façon que le deuxième galet (9.1, 9.2) soit apte à forcer la roue (5) de l'engin roulant à s'appuyer contre le premier galet (8.1, 8.2),
- un dispositif de commande (18, 22.1, 22.2) dont l'actionnement permet d'exercer une deuxième force (20) opposée à la première force (19), la deuxième force (20) étant apte à amener le deuxième galet (9.1, 9.2) à s'éloigner du premier galet (8.1, 8.2) de façon à dégager la roue (5) de l'engin roulant.

5. Système selon la revendication 4,
**caractérisé en ce que** le dispositif de commande (18, 22.1, 22.2) comprend au moins un treuil (18) et deux câbles (22.1, 22.2), chaque câble (22.1, 22.2) présentant une première extrémité fixée au treuil (18) et une deuxième extrémité fixée au deuxième galet (9.1, 9.2), l'actionnement du treuil (18) étant apte à tirer chacun desdits câbles (22.1, 22.2) qui sont aptes à exercer la deuxième force (20) sur le deuxième galet (9.1, 9.2).

6. Système selon la revendication 4,
**caractérisé en ce que** l'élément de guidage comprend :
- un support (23.1, 23.2) du deuxième galet (9.1, 9.2) sur lequel est fixé le deuxième galet (9.1, 9.2), et
- une tige (24.1, 24.2) fixée sur le longeron (6.1, 6.2) parallèlement à l'axe longitudinal (6.3, 6.4) du longeron (6.1, 6.2), la tige (24.1, 24.2) étant apte à guider en translation le support (23.1, 23.2) du deuxième galet (9.1, 9.2).

7. Système selon une des revendication 4 à 6,
**caractérisé en ce que** le dispositif élastique (17.1, 17.2) comprend un ressort de traction apte à exercer la première force (19) sur le support (23.1, 23.2) du deuxième galet (9.1, 9.2).

8. Système selon l'une quelconque des revendications 1 à 7,
**caractérisé en ce que** le système de remorquage (1) comprend des roues (25) orientables fixées le long de la barre (4) et de la fourche de façon que le système de remorquage (1) soit déplaçable.

9. Système selon l'une quelconque des revendications 1 à 8,
**caractérisé en ce que** le système comprend un capteur de force (21) fixé sur la barre (4) apte à détecter la traction et la torsion exercée sur la barre (4).

## Patentansprüche

1. Schleppsystem (1), umfassend:
- einen Holm (4), der eine Längsachse (4.1) umfasst,
- eine erste Anhängevorrichtung (3), die an einem ersten Ende des Holms (4) angeordnet ist, wobei die erste Anhängevorrichtung (3) imstande ist, das Schleppsystem an ein Schleppfahrzeug anzuhängen,
- eine zweite Anhängevorrichtung (2), die an einem zweiten Ende des Holms (4) angeordnet ist, wobei die zweite Anhängevorrichtung (2) imstande ist, das Schleppsystem (1) an ein zu schleppendes Fahrzeug anzuhängen,
wobei die zweite Anhängevorrichtung (2) eine Gabel umfasst, die imstande ist, mindestens ein Rad (5) des Fahrzeugs festzuhalten, wobei die Gabel besitzt:
-zwei Längsträger (6.1, 6.2), zwischen denen mindestens ein Rad (5) des Fahrzeugs imstande ist, aufgenommen zu werden, wobei jeder Längsträger (6.1, 6.2) eine Längsachse (6.3, 6.4) im Wesentlichen parallel zur Längsachse (4.1) des Holms (4) aufweist,
- eine Beabstandungsvorrichtung (7), die imstande ist, den Abstand zwischen den zwei Längsträger (6.1, 6.2) zu verändern,
- eine Haltevorrichtung (9.1, 9.2, 8.1, 8.2), die imstande ist, das Rad (5) zwischen den zwei Längsträgern (6.1, 6.2) zu halten,
**dadurch gekennzeichnet, dass** die Beabstandungsvorrichtung (7) umfasst:
- zwei verschiebbare Schenkel (10.1, 10.2), wobei jeder verschiebbare Schenkel (10.1, 10.2) aufweist:
• eine Längsachse (10.3, 10.4), die mit der Längsachse (4.1) des Holms (4) einen Winkel (α) bildet,
• einen ersten Teil (11.1, 11.2), von dem ein Ende an einem Ende eines Längsträgers (6.1, 6.2) befestigt ist, und
• einen zweiten Teil (12.1, 12.2), von dem ein Ende am zweiten Ende des Holms (4) befestigt ist, wobei sich der zweite Teil (12.1, 12.2) imstande ist, im ersten Teil (11.1, 11.2) entlang der Längsachse (10.3, 10.4) des verschiebbaren Schenkels (10.1, 10.2) verschoben zu werden,
- eine Betätigungsvorrichtung, die konfiguriert ist, das gleichzeitige Verschieben der verschiebbaren Schenkel (10.1, 10.2) anzutreiben.

2. System nach Anspruch 1,
**dadurch gekennzeichnet, dass** die Betätigungsvorrichtung umfasst:
- vier Stangen (13), die paarweise angelenkt sind, um ein verformbares Parallelogramm zu bilden, das in einer Ebene umfasst ist, die im Wesentlichen zu den Längsachsen (6.3, 6.4) der Längsträger (6.1, 6.2) parallel ist, wobei die vier Stangen (13) im Bereich eines ersten Paars gegenüberliegender Ecken des Parallelogramms gemäß einer ersten Anlenkung (14.1) und einer zweiten Anlenkung (14.2), und im Bereich eines zweiten Paars gegenüberliegender Ecken gemäß einer dritten Anlenkung (14.3) und einer vierten Anlenkung (14.4) angelenkt sind, wobei die erste Anlenkung (14.1) entlang einer Achse, die zur Ebene des Parallelogramms senkrecht ist, drehbeweglich mit dem ersten Teil (11.1) eines verschiebbaren Schenkels (10.1) verbunden ist, wobei die zweite Anlenkung (14.2) entlang einer Achse, die zur Ebene des Parallelogramms senkrecht ist, drehbeweglich mit dem ersten Teil (11.2) des anderen verschiebbaren Schenkels (10.2) verbunden ist,
- eine Gewindestange (15), die imstande ist, sich in eine Mutter einzuschrauben, welche fest mit der dritten Anlenkung (14.3) verbunden ist, wobei die Gewindestange (15) ein erstes Ende aufweist, das imstande ist, sich in einer Aufnahme zu drehen, die fest mit der vierten Anlenkung (14.4) verbunden ist, wobei die Gewindestange (15) konfiguriert ist, dass ein Einschrauben oder ein Herausschrauben in der Mutter imstande ist, jeweils ein Annähern oder ein Entfernen zwischen der ersten Anlenkung (14.1) und der zweiten Anlenkung (14.2) anzutreiben, wobei das Annähern oder das Entfernen imstande ist, ein Verschieben des zweiten Teils (12.1, 12.2) jedes Schenkels (10.1, 10.2) im ersten Teil (11.1, 11.2) anzutreiben, wobei das Verschieben imstande ist, das Verkleinern oder das Vergrößern des Abstands zwischen den Längsträgern (6.1, 6.1) anzutreiben.

3. System nach Anspruch 2,
**dadurch gekennzeichnet, dass** die Gewindestange (15) ein zweites Ende umfasst, das mit einer Vorrichtung zum Steuern (16) des Einschraubens und des Herausschraubens der Gewindestange (15) in der Mutter versehen ist.

4. System nach einem der Ansprüche 1 bis 3,
**dadurch gekennzeichnet, dass** die Haltevorrichtung (9.1, 9.2, 8.1, 8.2) für jeden Längsträger (6.1, 6.2) umfasst:
- mindestens eine erste Rolle (8.1, 8.2), die am freien Ende des Längsträgers (6.1, 6.2) befestigt ist,
- mindestens eine zweite Rolle (9.1, 9.2), die mit Hilfe eines Führungselements entlang der Längsachse (6.3, 6.4) des Längsträgers (6.1, 6.2) translationsbeweglich mit dem Längsträger (6.1, 6.2) verbunden ist,
- eine elastische Vorrichtung (17.1, 17.2), die imstande ist, entlang der Längsachse (6.3, 6.4) des Längsträgers (6.1, 6.2) eine erste Kraft (19) auf die zweite Rolle (9.1, 9.2) auszuüben, wobei die erste Kraft (19) imstande ist, die zweite Rolle (9.1, 9.2) dazu zu bringen, sich der ersten Rolle (8.1, 8.2) anzunähern, sodass die zweite Rolle (9.1, 9.2) imstande ist, das Rad (5) des Fahrzeugs dazu zu zwingen, sich an die erste Rolle (8.1, 8.2) anzulegen,
- eine Steuervorrichtung (18, 22.1, 22.2), deren Betätigen es ermöglicht, eine zweite Kraft (20) auszuüben, die der ersten Kraft (19) entgegengesetzt ist, wobei die zweite Kraft (20) imstande ist, die zweite Rolle (9.1, 9.2) dazu zu bringen, sich von der ersten Rolle (8.1, 8.2) zu entfernen, um das Rad (5) des Fahrzeugs freizugeben.

5. System nach Anspruch 4,
**dadurch gekennzeichnet, dass** die Steuervorrichtung (18, 22.1, 22.2) mindestens eine Winde (18) und zwei Seile (22.1, 22.2) umfasst, wobei jedes Seil (22.1, 22.2) ein erstes Ende aufweist, das an der Winde (18) befestigt ist, und ein zweites Ende, das an der zweiten Rolle (9.1, 9.2) befestigt ist, wobei das Betätigen der Winde (18) imstande ist, jedes der Seile (22.1, 22.2) zu ziehen, die imstande sind, die zweite Kraft (20) auf die zweite Rolle (9.1, 9.2) auszuüben.

6. System nach Anspruch 4,
**dadurch gekennzeichnet, dass** das Führungselement umfasst:
- einen Träger (23.1, 23.2) der zweiten Rolle (9.1, 9.2), auf dem die zweite Rolle (9.1, 9.2) befestigt ist, und
- eine Stange (24.1, 24.2), die parallel zur Längsachse (6.3, 6.4) des Längsträgers (6.1, 6.2) am Längsträger (6.1, 6.2) befestigt ist, wobei die Stange (24.1, 24.2) imstande ist, den Träger (23.1, 23.2) der zweiten Rolle (9.1, 9.2) translationsbeweglich zu führen.

7. System nach einem der Ansprüche 4 bis 6,
**dadurch gekennzeichnet, dass** die elastische Vorrichtung (17.1, 17.2) eine Zugfeder umfasst, die imstande ist, die erste Kraft (19) auf den Träger (23.1, 23.2) der zweiten Rolle (9.1, 9.2) auszuüben.

8. System nach einem der Ansprüche 1 bis 7,
**dadurch gekennzeichnet, dass** das Schleppsystem (1) ausrichtbare Räder (25) umfasst, die entlang des Holms (4) und der Gabel befestigt sind, sodass das Schleppsystem (1) bewegbar ist.

9. System nach einem der Ansprüche 1 bis 8,
**dadurch gekennzeichnet, dass** das System einen am Holm (4) befestigten Kraftaufnehmer (21) umfasst, der imstande ist, den Zug und die Verwindung, die auf den Holm (4) ausgeübt werden, zu erkennen.

## Claims

1. Towing system (1) comprising:
- a bar (4) having a longitudinal axis (4.1),
- a first attachment device (3) arranged at a first end of the bar (4), the first attachment device (3) being able to attach the towing system to a towing vehicle,
- a second attachment device (2) arranged at a second end of the bar (4), the second attachment device (2) being able to attach the towing system (1) to a travelling machine to be towed,
wherein the second attachment device (2) comprises a fork able to hold at least one wheel (5) of the travelling machine, the fork having:
- two longitudinal members (6.1, 6.2) between which at least one wheel (5) of the travelling machine is able to be received, each longitudinal member (6.1, 6.2) having a longitudinal axis (6.3, 6.4) substantially parallel to the longitudinal axis (4.1) of the bar (4),
- a separation device (7) able to modify the spacing between the two longitudinal members (6.1, 6.2),
- a holding device (9.1, 9.2, 8.1, 8.2) able to hold the wheel (5) between the two longitudinal members (6.1, 6.2).
**characterized in that** the separation device (7) comprises:
-two sliding arms (10.1, 10.2), each sliding arm (10.1, 10.2) having:
∘ a longitudinal axis (10.3, 10.4) forming an angle (α) with the longitudinal axis (4.1) of the bar (4),
∘ a first part (11.1, 11.2), one end of which is fixed to one end of one longitudinal member (6.1, 6.2), and
∘ a second part (12.1, 12.2), one end of which is fixed to the second end of the bar (4), the second part (12.1, 12.2) being able to slide in the first part (11.1, 11.2) along the longitudinal axis (10.3, 10.4) of the sliding arm (10.1, 10.2),
- an actuation device configured so as to cause the simultaneous sliding of the sliding arms (10.1, 10.2).

2. System according to claim 1,
**characterized in that** the actuation device comprises:
- four rods (13) hinged in pairs in order to form a deformable parallelogram lying in a plane substantially parallel to the longitudinal axes (6.3, 6.4) of the longitudinal members (6.1, 6.2), the four rods (13) being hinged at a first pair of opposite corners of the parallelogram on a first hinge (14.1) and a second hinge (14.2) and at a second pair of opposite corners on a third hinge (14.3) and a fourth hinge (14.4), the first hinge (14.1) being rotatably connected to the first part (11.1) of a sliding arm (10.1) on an axis perpendicular to the plane of the parallelogram, the second hinge (14.2) being rotatably connected to the first part (11.2) of the other sliding arm (10.2) on an axis perpendicular to the plane of the parallelogram,
- a threaded rod (15) able to be screwed into a nut secured to the third hinge (14.3), the threaded rod (15) having a first end able to turn in a housing secured to the fourth hinge (14.4), the threaded rod (15) being configured so that screwing or unscrewing in the nut is able to cause the first hinge (14.1) and the second hinge (14.2) to move closer together or further apart from each other, respectively, said moving closer together or said moving further apart being able to cause a sliding of the second part (12.1, 12.2) of each arm (10.1, 10.2) in the first part (11.1, 11.2), said sliding being able to cause the reduction or increase in the spacing between the longitudinal members (6.1, 6.2).

3. System according to claim 2,
**characterized in that** the threaded rod (15) comprises a second end provided with a device (16) for controlling the screwing and unscrewing of the threaded rod (15) in the nut.

4. System according to any of claims 1 to 3,
**characterized in that** the holding device (9.1, 9.2, 8.1, 8.2) comprises, for each longitudinal member (6.1, 6.2):
- at least one first roller (8.1, 8.2) fixed to the free end of the longitudinal member (6.1, 6.2),
- at least one second roller (9.1, 9.2) connected to the longitudinal member (6.1, 6.2) so as to translate along the longitudinal axis (6.3, 6.4) of the longitudinal member (6.1, 6.2) by means of a guide element,
- a resilient device (17.1, 17.2) able to exert a first force (19) on the second roller (9.1, 9.2) along the longitudinal axis (6.3, 6.4) of the longitudinal member (6.1, 6.2), the first force (19) being able to cause the second roller (9.1, 9.2) to move closer to the first roller (8.1, 8.2) so that the second roller (9.1, 9.2) is able to force the wheel (5) of the travelling machine to bear against the first roller (8.1, 8.2),
- a control device (18, 22.1, 22.2), the actuation of which makes it possible to exert a second force (20) opposing the first force (19), the second force (20) being able to cause the second roller (9.1, 9.2) to move away from the first roller (8.1, 8.2) so as to release the wheel (5) of the travelling machine.

5. System according to claim 4,
**characterized in that** the control device (18, 22.1, 22.2) comprises at least one winch (18) and two cables (22.1, 22.2), each cable (22.1, 22.2) having a first end fixed to the winch (18) and a second end fixed to the second roller (9.1, 9.2), the actuation of the winch (18) being able to pull each of said cables (22.1, 22.2), which are able to exert the second force (20) on the second roller (9.1, 9.2).

6. System according to claim 4,
**characterized in that** the guide element comprises:
- a support (23.1, 23.2) for the second roller (9.1, 9.2), to which the second roller (9.1, 9.2) is fixed, and
- a rod (24.1, 24.2) fixed to the longitudinal member (6.1, 6.2) in parallel with the longitudinal axis (6.3, 6.4) of the longitudinal member (6.1, 6.2), the rod (24.1, 24.2) being able to guide the support (23.1, 23.2) for the second roller (9.1, 9.2) in translation.

7. System according to any of claim 4 to 6,
**characterized in that** the resilient device (17.1,17.2) comprises a draw spring able to exert the first force (19) on the support (23.1, 23.2) for the second roller (9.1, 9.2).

8. System according to any of claims 1 to 7,
**characterized in that** the towing system (1) comprises orientable wheels (25) fixed along the bar (4) and fork so that the towing system (1) is movable.

9. System according to any of claims 1 to 8,
**characterized in that** the system comprises a force sensor (21) fixed to the bar (4) able to detect the traction and torsion exerted on the bar (4).
